# EUROPÄISCHE PATENTANMELDUNG

(11) **EP 4 458 733 A2**
(43) Veröffentlichungstag der Anmeldung: **06.11.2024**
(21) Anmeldenummer: 24196460.0
(22) Anmeldetag: 07.09.2017
(51) Int. Cl.: B65G 1/00

(54) **VERFAHREN ZUM ÖFFNEN EINER AN EINEM LAUFWAGEN HÄNGENDEN TRANSPORTTASCHE SOWIE TASCHENÖFFNUNGSVORRICHTUNG ZUR DURCHFÜHRUNG DES VERFAHRENS**

(30) Priorität: 09.09.2016 CH 11712016
(62) Teilanmeldung aus: 17189731.7
(71) Anmelder: Ferag AG, 8340 Hinwil ZH (CH)
(72) Erfinder: Fenile, Roberto, 8340 Hinwil (CH)
(74) Vertreter: Rentsch Partner AG

(57) **Zusammenfassung**

Die vorliegende Erfindung betrifft eine Taschenöffnungsvorrichtung (10) zum Öffnen einerTransporttasche (15), umfassend eine im Bereich einer Laufschiene (11) angeordnete erste Vorrichtung zum Anhalten eines Laufwagens (12) und wenigstens einen im Bereich der Laufschiene (11) angeordneten Öffnungsmechanismus (17) zum Öffnen einer an einem angehaltenen Laufwagen (12) hängenden Transporttasche (15) mit einem Schwenkrahmen (15b). Der Öffnungsmechanismus (17) weist entweder einen um eine dritte quer zu der Beförderungsrichtung (BR) orientierte Schwenkachse verschwenkbaren Schwenkhebel mit einem Mitnehmer auf, um den Schwenkrahmen (1 5b) am Laufwagen (12) zum Be- und/oder Entladen von zu transportierendem Fördergut von der ersten in die zweite Position zu verschwenken und in der zweiten Position zu halten. Alternativ weist der Öffnungsmechanismus (17) einen linearen Aktuator auf, um den Schwenkrahmen (15b) zu verschwenken, oder eine Öffnungsschnecke, um den Schwenkrahmen (1 5b) in die Öffnungsposition zu verschwenken, oder einen automatisch arbeitenden Greifer, um den Schwenkrahmen (15b) in die Öffnungsposition zu verschwenken. Weiterhin ist die Erfindung auf ein Verfahren zum Öffnen einer Transporttasche (15) gerichtet.

## Beschreibung

### TECHNISCHES GEBIET

Die vorliegende Erfindung bezieht sich auf das Gebiet der Fördertechnik. Sie betrifft ein Verfahren zum Öffnen einer Transporttasche an einem Laufwagen hängenden Transporttasche gemäss dem Oberbegriff des Anspruchs 1.

Sie betrifft weiterhin eine Taschenöffnungsvorrichtung zur Durchführung des Verfahrens.

### STAND DER TECHNIK

Aus dem Stand der Technik ist eine Vielzahl von auf dem Einsatz von hängenden, für das Be- und Entladen des Fördergutes zu öffnenden, Transporttaschen basierenden Transport- bzw. Fördereinrichtungen bekannt.

Die Druckschrift EP 2 130 968 B1 betrifft eine Transport-Tasche und eine Förder-Anlage für eine Transport-Tasche. Die Transport-Tasche besteht aus einer zumindest formstabilen Trage-Wand, die in ihrem unteren Bereich mit mindestens einer Kupplung ausgerüstet ist und die in ihrem oberen Bereich mit Mitteln zum Auslösen der Kupplung versehen ist. Die Boden-Seiten-Wand ist zumindest in ihrem unteren Bereich flexibel ausgebildet und weist Gegen-Kupplungs-Mittel auf, die mit der Kupplung in Eingriff bringbar sind, sodass die Transport-Tasche unten geschlossen werden kann. Wenn die Kupplung geöffnet wird, öffnet die Transport-Tasche nach unten und gibt eine transportierte Ware ab.

Die hierzu gehörige Förder-Anlage hat eine Förder-Schiene mit in einer Förderrichtung bewegbaren Mitnehmern zur Aufnahme je eines Trage-Hakens, eine Schliess-Station zum Kuppeln der Gegen-Kupplungs-Mittel der flexiblen Boden-Seiten-Wand mit der mindestens einen Kupplung der Trage-Wand, eine Belade-Station mit Mitteln zum Anheben der Bügel zum Distanzieren der Boden-Seiten-Wand von der Trage-Wand entgegen der Förderrichtung und eine Entlade-Station mit Mitteln zum Auslösen der Mittel zum Öffnen der Kupplung.

Die Druckschrift DE 10 2012 108 757 A1 betrifft eine Tragetasche für eine Hängefördervorrichtung für den hängenden Transport von Objekten sowie einen Schliessmechanismus zum Schliessen einer Tragetasche und eine Hängefördervorrichtung. Sie offenbart eine Tragetasche für eine Hängefördervorrichtung für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an eine Hängefördervorrichtung anhängbar ist, um von der Hängefördervorrichtung hängend transportiert zu werden, wobei der Taschenbeutel einen ersten und einen zweiten, z. B. stofflich voneinander separaten, Beutelabschnitt aufweist, die jeweils einen mit dem Halterahmen verbundenen Beutelendabschnitt und einen von dem Halterahmen abgewandten zweiten Beutelendabschnitt aufweisen, wobei die zweiten Beutelendabschnitte über einen Gelenkmechanismus miteinander verbunden sind, welcher in eine Entladestellung bringbar (mittels Schwenkens um eine Schwenkachse) ist, in welcher die zweiten Beutelendabschnitte in einem Abstand voneinander angeordnet sind, sodass der Taschenbeutel zur Abgabe von Objekten, z. B. zur Abgabe vertikal nach unten, mit einer zwischen den zweiten Beutelendabschnitten gebildeten Auslassöffnung versehen ist, und welcher in eine Beladestellung bringbar (mittels Schwenkens um eine Schwenkachse) ist, in welcher die zweiten Beutelendabschnitte zueinander benachbart angeordnet sind, sodass die Auslassöffnung geschlossen ist und der Taschenbeutel Objekte aufnehmen, d. h. darin/in seinem Inneren halten, kann.

Die Druckschrift DE 10 2008 061 685 A1 betrifft eine Belade-Station für in einer HängeFörder-Anlage transportierte Transport-Taschen. Die Belade-Station weist eine obere Zuführ-Schiene für die Transport-Taschen, einen sich an die Zuführ-Schiene anschliessenden Senkrecht-Förderer zum Zuführen der Transport-Taschen in eine untere Belade-Position, eine Einrichtung zum Öffnen der Transport-Taschen in der Belade-Position und eine sich an den Senkrecht-Förderer anschliessende untere Abführ-Schiene zum Abführen der Transport-Taschen aus der Belade-Position auf. Hier wird die Tasche während der Bewegung in die Ladeposition durch eine Kulissenführung geöffnet.

Die Druckschrift DE 10 2004 018 569 A1 betrifft eine Sammeleinrichtung zum sortierenden Sammeln von Objekten, insbesondere von Kleidungsstücken, und eine Fördervorrichtung zum Transport der Sammeleinrichtung. Die Sammeleinrichtung zeichnet sich aus durch eine Sammeltasche, die im Wesentlichen ein mit einem in eine Fördervorrichtung integrierbaren Mitnahmeelement versehenes Rahmengestell und einen am Rahmengestell hängenden Taschenbeutel aufweist, wobei das Mitnahmeelement und das Rahmengestell relativ zueinander um eine quer zur Förderrichtung liegende Achse schwenkbar sind, und wobei bei horizontaler Anordnung des Rahmengestells der Taschenbeutel geöffnet und bei vertikaler Anordnung des Rahmengestells der Taschenbeutel zusammengefallen und im Wesentlichen geschlossen ist.

Die Druckschrift DE 10 2013 205 172 A1 offenbart eine Transporttasche zum hängenden Transport von Waren. Die Transporttasche hat eine steife Tragwand, die in ihrem in Transportstellung oberen Abschnitt mit einem Tragelement zum hängenden Tragen der Transporttasche verbunden ist. Eine flexible Waren-Haltewand bildet mit der Tragwand eine zumindest in der Transportstellung der Transporttasche nach unten und zu zwei gegenüberliegenden Seiten hin geschlossene Tragtasche. Die Tragwand ist mit der Haltewand zwischen einem in der Transportstellung oberen Wand-Verbindungsabschnitt und einem in der Transportstellung unteren Wand-Verbindungsabschnitt derart verbunden, dass eine Länge der bahnförmigen Haltewand zwischen den beiden Wand-Verbindungsabschnitten variabel an den Transport verschiedener Waren angepasst werden. Die Ausführung der Transporttasche ist derart, dass diese Längenanpassung der Haltewand durch eine Relativverlagerung der Haltewand zur Tragwand zumindest im Bereich eines der beiden Verbindungsabschnitte erfolgt.

Die Druckschrift DE 10 2010 033 905 A1 betrifft eine Förderanlage mit Tragetaschen für Fördergut. Die Förderanlage umfasst eine ortsfeste Förderschiene mit in einer Förderrichtung bewegten Mitnehmern zur Aufnahme je einer Aufhängestelle der Tragetaschen, die Tragetasche mit einem Taschenbeutel zur Aufnahme des Förderguts, wobei der Taschenbeutel rechteckförmig angeordnete breite und schmale Seitenwände mit den Abmessungen a, b aufweist, den Taschenbeutel mit einem Tragrahmen, der eine Zugstange mit der am oberen Ende ausgebildeten Aufhängestelle aufweist, und der ein Beschickungsfenster für den Taschenbeutel umspannt, den Tragrahmen mit einem sich parallel zu den breiten Seitenwänden erstreckenden Druckstück, eine zwischen dem Mitnehmer und dem Tragrahmen befindliche Kupplung zur Einstellung einer stabilen Drehlage der Tragetasche relativ zu dem Mitnehmer, in der die Tragetasche eine Stellung mit quer zu der Förderrichtung befindlichen Lage des Beschickungsfensters einnimmt und zur Einstellung einer instabilen Drehlage der Tragetasche relativ zu dem Mitnehmer, in der die Tragetasche eine Stellung mit parallel zu der Förderrichtung befindlichem Beschickungsfenster einnimmt, wobei die instabile Drehlage durch Ineingriffgelangen des Druckstücks mit einer ortsfesten Kufe gegen den Widerstand eines Rückstellmoments einstellbar ist.

Die Druckschrift DE 10 2014 203 298 A1 betrifft eine Hängefördereinrichtung zum Transport von Fördergut in Hängetaschen. Die Hängefördereinrichtung umfasset eine Mehrzahl von Hängetaschen, jeweils mit einer ersten Taschenseitenwand und einer zweiten Taschenseitenwand, die in einem Klappverbindungsbereich so miteinander verbunden sind, dass sie zum Öffnen und Schliessen eines Fördergutaufnahmebereiches auseinanderklappbar und zusammenklappbar sind, und mit einem Anhängmittel zum Anhängen der Hängetasche an der Hängefördereinrichtung, wobei die erste Taschenseitenwand schwenkbeweglich um eine in einer Transportstellung der Hängetasche zumindest annähernd horizontal verlaufende Taschen-Schwenkachse mit dem Anhängmittel verbunden ist, und die zweite Taschenseitenwand derart mit dem Anhängmittel verbunden oder davon beaufschlagbar ist, dass durch Schwenken der ersten Taschenseitenwand um die Taschen-Schwenkachse die Taschenseitenwände auseinanderklappbar und zusammenklappbar sind, wobei die Hängefördereinrichtung weiter eine Führungsschienenanordnung zum geführten Bewegen der Hängetaschen in ihrer Transportstellung und eine Ladestation für die Hängetaschen, mit einer Ladeplattform, die unterhalb der Führungsschienenanordnung positioniert ist, umfasst. Die Ladeplattform ist relativ zu der Führungsschienenanordnung in vertikaler Richtung verstellbar, vorzugsweise automatisch verfahrbar.

Die Druckschrift WO 2015/124525 A1 betrifft eine Hängetasche als Fördergutbehälter zum Transport von Fördergut in einer Hängefördereinrichtung. Die Hängetasche umfasst eine erste Taschenseitenwand und eine zweite Taschenseitenwand, die einander gegenüberliegend einen Fördergutaufnahmebereich zwischen sich begrenzen und in einem Klappverbindungsbereich so miteinander verbunden sind, dass sie zum Öffnen und Schliessen des Fördergutaufnahmebereiches auseinanderklappbar und zusammenklappbar sind, und ein Anhängmittel zum Anhängen der Hängetasche an eine Führungsschienenanordnung einer Hängefördereinrichtung, wobei die erste Taschenseitenwand einen starren Randkonturbereich aufweist und daran um eine Schwenkachse schwenkbeweglich mit dem Anhängmittel verbunden ist und wobei die zweite Taschenseitenwand derart mit dem Anhängmittel verbunden oder davon beaufschlagbar ist, dass durch Schwenken der ersten Taschenseitenwand um die Schwenkachse die erste und die zweite Taschenseitenwand auseinanderklappbar und zusammenklappbar sind. Die Hängetasche weist eine Basis-Baugruppe und ein Wechselelement auf, wobei die Basis-Baugruppe das Anhängmittel und den starren Randkonturbereich aufweist, und wobei das Wechselelement wenigstens einen Teil der zweiten Taschenseitenwand, vorzugsweise die gesamte zweite Taschenseitenwand, umfasst und auswechselbar an der Basis-Baugruppe vorgesehen ist.

Die Druckschrift DE 10 2011 015 138 B4 offenbart eine Hängeförder-Transporttasche zur automatischen Entladung eines geladenen Stückguts mit einem Grundkörper sowie einer daran anschliessenden, separaten Aufnahme, wobei der Grundkörper eine Oberseite, eine Unterseite, seitliche Seiten und Stirnseiten aufweist, wobei die Aufnahme einen Boden, eine Oberseite, Stirnseiten und seitliche Seiten aufweist, wobei die Entladung der Transporttasche durch eine der Stirnseiten des Grundkörpers hindurch erfolgt, die offen ausgebildet ist, wobei eine gegenüberliegende Stirnseite vorzugsweise ebenfalls offen ausgebildet ist, wobei die Unterseite des Grundkörpers an die Oberseite der Aufnahme koppelt, um einen Aufnahmeraum unterhalb des Grundkörpers zu definieren, und wobei die Unterseite des Grundkörpers, insbesondere in einem unbeladenen Zustand der Transporttasche, offen ausgebildet ist, wobei die Oberseite der Aufnahme im unbeladenen Zustand der Transporttasche offen ausgebildet ist, wobei zumindest die seitlichen Seiten des Grundkörpers, die seitlichen Seiten der Aufnahme und der Boden der Aufnahme geschlossen ausgebildet sind und wobei zumindest die seitlichen Seiten der Aufnahme derart flexibel ausgebildet sind, dass der Boden in eine Entladestellung der Transport-tasche anhebbar ist, in welcher der Boden in die Unterseite des Grundkörpers gehoben ist. Die Transporttasche weist jeweils eine Rückhalteeinrichtung im Bereich der Stirnseiten auf, die sich zumindest entlang einer Übergangslinie zwischen dem Grundkörper und der Aufnahme erstreckt.

Die Druckschrift DE 10 2012 018 925 A1 offenbart eine Taschen-Hängeförderanlage mit einem Hängeförderer zum Transportieren von Taschen entlang einer Führungsschiene stromabwärts in einer Förderrichtung, wobei die Taschen in einer Transportstellung lotrecht unterhalb der Führungsschiene hängen und wobei die Taschen in einer Beladestellung im Wesentlichen horizontal ausgerichtet sind, mit einer Beladestation, die eine Auslenkeinrichtung aufweist, wobei die Auslenkeinrichtung ein stromaufwärts gelegenes Ende und ein stromabwärts gelegenes Ende aufweist und unterhalb der Führungsschiene des Hängeförderers angeordnet ist, wobei die Taschen während des Transports in der Förderrichtung in Anlage mit der Auslenkeinrichtung kommen, um die Taschen zumindest anfänglich während eines fortgesetzten Transports in der Förderrichtung aus der lotrechten Transportstellung in die im Wesentlichen horizontale Beladestellung zu drehen, und mit einer Tasche, wobei die Tasche eine Aufhängeeinrichtung zum schwenkbaren Koppeln der Tasche an die Führungsschiene des Hängeförderers, eine Rückseite, die in der lotrechten Transportstellung einen oberen Abschnitt und einen unteren Abschnitt aufweist, wobei sich der untere Abschnitt in einer Längsrichtung der Rückseite an den oberen Abschnitt anschliesst, einen Deckel, eine Vorderseite und einen Boden aufweist, wobei die Rückseite in der Querrichtung jeweils breiter als der Deckel, die Vorderseite und der Boden ausgebildet ist, so dass die Rückseite zumindest einen, seitlich in Bezug auf die Vorderseite überstehenden Flügelbereich aufweist, der während eines Transports der Tasche durch die Beladestation zum Drehen der Tasche gegen des mindestens eine Schwenkelement anstösst und der in der Beladestellung auf der Auslenkeinrichtung aufliegt.

Allen diesen bekannten Verfahren und Einrichtungen ist gemeinsam, dass sie bei laufendem Transport Be- und/oder Entladen werden, wozu die jeweiligen Taschen in der laufenden Transportbewegung geöffnet werden und das Fördergut eingefüllt oder entladen wird. Nachteilig ist dabei, dass reine solche "mitlaufende" Be- und /oder Entladung der Taschen einen erhöhten verfahrenstechnischen und apparativen Aufwand erfordert, der insbesondere durch die notwendige Synchronisation der verschiedenen Bewegungen bedingt ist.

### DARSTELLUNG DER ERFINDUNG

Es ist daher eine Aufgabe der Erfindung, ein Verfahren zum Öffnen von Transporttaschen in einer auf Transporttaschen basierende Fördereinrichtung anzugeben, sowie eine Taschenöffnungsvorrichtung zur Durchführung des Verfahrens zu schaffen, welche die Nachteile bekannter Verfahren und Vorrichtungen vermeiden, einfacher angelegt und aufgebaut sind und sich durch einen weniger störanfälligen Ablauf bzw. Betrieb auszeichnen.

Die Aufgabe wird durch die Merkmale der Ansprüche 1 und 13 gelöst.

Das Verfahren nach der Erfindung zum Öffnen einer Transporttasche, die sich zur Beförderung von Gütern an einem Laufwagen hängend entlang einer sich in einer Beförderungsrichtung erstreckenden Laufschiene in einer Beförderungsrichtung bewegt, ist dadurch gekennzeichnet, dass der Laufwagen mit der daran hängenden Transporttasche an einem vorbestimmten Punkt der Laufschiene zum Öffnen der Transporttasche in seiner Vorwärtsbewegung angehalten wird, und dass die Transporttasche des Laufwagens zum Be- und/oder Entladen von zu transportierendem Fördergut geöffnet wird.

Anders als bei den bekannten Verfahren, bei denen die Tasche während eines unverminderten Weitertransports geöffnet, be- oder entladen und wieder geschlossen wird, werden beim erfindungsgemässen Verfahren die zu öffnenden Transporttaschen einzeln angehalten und geöffnet.

Dabei kann die Transporttasche des Laufwagens zum Be- und/oder Entladen von zu transportierendem Fördergut erst geöffnet werden, wenn sich der Laufwagen bereits in seiner Ruheposition befindet.

Auch kann die Transporttasche des Laufwagens am oberen Ende einen Schwenkrahmen aufweisen, welcher zum Öffnen bzw. Schliessen der Transporttasche verschwenkt wird.

Gemäss einer Ausgestaltung des erfindungsgemässen Verfahrens wird die Ankunft des Laufwagens in seiner Ruheposition mittels eines Laufwagendetektors detektiert, und der Laufwagendetektor setzt einen Öffnungsmechanismus in Gang, wenn er einen Laufwagen in der Ruheposition detektiert.

Insbesondere kann die Transporttasche eine mit beiden Enden unter Ausbildung einer nach unten hängenden Tragschlaufe an dem Schwenkrahmen befestigte Materialbahn aufweisen, wobei die beiden Enden der Tragschlaufe in Beförderungsrichtung hintereinander angeordnet sind, wobei der Schwenkrahmen am Laufwagen um eine quer zur Beförderungsrichtung orientierte erste Schwenkachse zwischen einer ersten Position, in welcher die Transporttasche geschlossen ist, und einer zweiten Position, in welcher die Transporttasche offen ist, verschwenkbar ist, und wobei der Schwenkrahmen am Laufwagen zum Be- und/oder Entladen von zu transportierendem Fördergut durch einen Öffnungsmechanismus von der ersten in die zweite Position verschwenkt und in der zweiten Position gehalten wird.

Die Transporttasche wird dabei nach aussen im wesentlichen durch die beiden vertikalen Abschnitte der Materialbahn begrenzt, die zwei Taschenwände bilden. Die Transporttasche ist offen, wenn die beiden Taschenwände einen ausreichenden Abstand voneinander haben, um ein Transportgut in den Zwischenraum einzubringen oder daraus zu entnehmen. Die Transporttasche ist geschlossen, wenn die Taschenwände einander so weit angenähert sind, dass ein Befüllen mit bzw. eine Entnahme von Transportgut praktisch nicht mehr möglich ist.

Insbesondere kann der Öffnungsmechanismus ein zum Öffnen der Transporttasche bewegbares Element umfassen.

Dabei kann das Be- und Entladen des zu transportierenden Fördergutes quer zur Beförderungsrichtung durch seitliche Öffnungen der Transporttasche erfolgen. Es ist aber auch denkbar, das Be- und Entladen der Transporttasche von oben durchzuführen.

Nach dem Be- und/oder Entladen kann der Laufwagen mit der daran hängenden Transporttasche an dem vorbestimmten Punkt der Laufschiene frei gegeben werden, und der Schwenkrahmen schwenkt nach der Freigabe um die erste Schwenkachse von der zweiten Position in die erste Position zurück.

Insbesondere kann das Zurückschwenken des Schwenkrahmens aufgrund der Schwerkraft selbsttätig erfolgen.

Dabei kann die am Laufwagen hängende Transporttasche sich nach der Freigabe mit ihrem in der zweiten Position befindlichen Schwenkrahmen am Öffnungsmechanismus vorbei bewegen, wobei der Schwenkrahmen erst nach dem Passieren des Öffnungsmechanismus von der zweiten Position in die erste Position zurückschwenkt.

Auch kann dem Laufwagen mit der daran hängenden Transporttasche nach der Freigabe ein Bewegungsimpuls in Beförderungsrichtung erteilt werden.

Insbesondere kann der Bewegungsimpuls mittels eines stationären, schwenkbaren Beförderungshebels erteilt werden, welcher kurzzeitig mit dem Laufwagen in Eingriff gebracht wird.

Die erfindungsgemässe Taschenöffnungsvorrichtung ist gekennzeichnet durch eine im Bereich der Laufschiene angeordnete erste Vorrichtung zum Anhalten eines Laufwagens und wenigstens einen im Bereich der Laufschiene angeordneten Öffnungsmechanismus zum Öffnen einer an einem angehaltenen Laufwagen hängenden Transporttasche.

Gemäss einer Ausgestaltung der Erfindung sind die erste Vorrichtung und der Öffnungsmechanismus steuerungstechnisch miteinander verbunden.

Eine andere Ausgestaltung ist dadurch gekennzeichnet, dass die erste Vorrichtung und der Öffnungsmechanismus seitlich der Laufschiene angeordnet sind.

Insbesondere können die erste Vorrichtung und der Öffnungsmechanismus auf gegenüberliegenden Seiten der Laufschiene angeordnet sein. Es ist aber auch denkbar, beide Vorrichtungen auf derselben Seite der Laufschiene anzuordnen, wenn ausreichend Platz dafür vorhanden ist.

Auch kann ein Paar gleichartiger Öffnungsmechanismen spiegelbildlich auf gegenüberliegenden Seiten der Laufschiene angeordnet sein. Ein solcher paariger Öffnungsmechanismus kommt insbesondere dann in Betracht, wenn der Schwenkrahmen der Transport-tasche aus Gründen der Grösse, des Gewichtes oder der Befüllung der Tasche nur schwer verschwenkbar ist.

Eine weitere Ausgestaltung der Erfindung ist dadurch gekennzeichnet, dass die erste Vorrichtung ein bewegliches Stoppelement aufweist, welches in einer ersten Position einen ankommenden Laufwagen am vorbestimmten Punkt der Laufschiene anhält und in einer zweiten Position einen dort angehaltenen Laufwagen freigibt.

Insbesondere kann das bewegliche Stoppelement um eine quer zur Beförderungsrichtung orientierte erste Schwenkachse schwenkbar gelagert und zwischen der ersten Position und der zweiten Position um die erste Schwenkachse verschwenkbar sein.

Auch kann dem beweglichen Stoppelement ein mit dem Stoppelement gemeinsam um die erste Schwenkachse verschwenkbarer Beförderungshebel zugeordnet sein, welcher bei der Freigabe eines angehaltenen Laufwagens durch das Stoppelement gleichzeitig dem Laufwagen einen Bewegungsimpuls in Beförderungsrichtung erteilt.

Eine weitere Ausgestaltung der Erfindung ist dadurch gekennzeichnet, dass innerhalb der ersten Vorrichtung am vorbestimmten Punkt der Laufschiene ein Laufwagendetektor angeordnet ist, welcher einen angehaltenen Laufwagen detektiert, und dass der Laufwagendetektor steuerungstechnisch mit dem Öffnungsmechanismus verbunden ist.

Eine andere Ausgestaltung der Erfindung ist dadurch gekennzeichnet, dass die Transport-tasche eine mit beiden Enden unter Ausbildung einer nach unten hängenden, eine Vorder- und eine Rückwand bildenden Tragschlaufe an einem Schwenkrahmen befestigte Materialbahn aufweist, wobei die beiden Enden der Tragschlaufe in Beförderungsrichtung hintereinander angeordnet sind, dass der Schwenkrahmen am Laufwagen um eine quer zur Beförderungsrichtung orientierte zweite Schwenkachse zwischen einer ersten Position, in welcher die Transporttasche geschlossen ist, und einer zweiten Position, in welcher die Transporttasche offen ist, verschwenkbar ist, und dass der Öffnungsmechanismus einen um eine dritte, quer zur Beförderungsrichtung orientierte Schwenkachse verschwenkbaren Schwenkhebel aufweist, welcher am Rand der Bewegungsbahn des Schwenkrahmens einer geförderten Transporttasche angeordnet ist und an seinem freien Ende mit einem Mitnehmer ausgestattet ist, welcher in Eingriff mit dem Schwenkrahmen gebracht werden kann, um den Schwenkrahmen am Laufwagen zum Be- und/oder Entladen von zu transportierendem Fördergut von der ersten in die zweite Position zu verschwenken und in der zweiten Position zu halten.

Insbesondere kann der Schwenkhebel zwischen einer Ruheposition und einer Öffnungsposition verschwenkbar sein, wobei sich der Mitnehmer am Schwenkhebel des Öffnungsmechanismus in der Ruheposition vor dem Schwenkrahmen einer angehaltenen Transporttasche befindet, und in der Öffnungsposition eine Position zwischen der Vorder- und Rückwand der Transporttasche einnimmt.

Auch kann sich der Schwenkbereich des Schwenkhebels unterhalb der dritten Schwenkachse erstrecken und kann zwischen Ruheposition und Öffnungsposition beispielsweise 90° oder 180° betragen.

Weiterhin ist es möglich und denkbar, anstelle eines Schwenkhebels einen anderen, insbesondere linearen Aktuator, beispielsweise eine linear bewegliche Kolbenstange, einzusetzen, um den Schwenkrahmen zu verschwenken. Auch kann zum Verschwenken des Schwenkrahmens eine Öffnungsschnecke eingesetzt werden, die von der Seite an den Schwenkrahmen herangeführt wird und ihn auf dem grösser werdenden Radius der Schnecke gleitend in die Öffnungsposition verschwenkt. Weiterhin ist es denkbar, einen automatisch arbeitenden Greifer vorzusehen, der den Schwenkrahmen ausserhalb der Schwenkachse ergreift und in die Öffnungsposition verschwenkt.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: in einer perspektivischen Seitenansicht eine Ausgestaltung der Taschenöffnungsvorrichtung nach der Erfindung, wobei nur die Transporttasche und der eigentliche, mit der Transporttasche in Eingriff kommende Öffnungsmechanismus gezeigt sind;
- Fig. 2: in einem vergrösserten Ausschnitt aus Fig. 1 den Laufwagen mit der daran hängenden Transporttasche und den Öffnungsmechanismus;
- Fig. 3: in zwei Ansichten entgegen der Beförderungsrichtung (Fig. 3a) und quer zur Beförderungsrichtung (Fig. 3b) eine zum Öffnen bereite Transporttasche im Bereich des Öffnungsmechanismus;
- Fig. 4: in zwei Teilfiguren die Transporttasche unmittelbar vor der Öffnung (Fig. 4a) und nach der Öffnung (Fig. 4b);
- Fig. 5: eine fotografische Gesamtansicht der Taschenöffnungsvorrichtung (ohne Transporttasche) mit dem gegenüber dem Öffnungsmechanismus angeordneten, für das Stoppen und Weiterbefördern der Transporttaschen zuständigen Hebelmechanismus; und
- Fig. 6: eine fotografische Detailansicht des für das Stoppen und Weiterbefördern der Transporttaschen zuständigen Hebelmechanismus.

### WEGE ZUR AUSFÜHRUNG DER ERFINDUNG

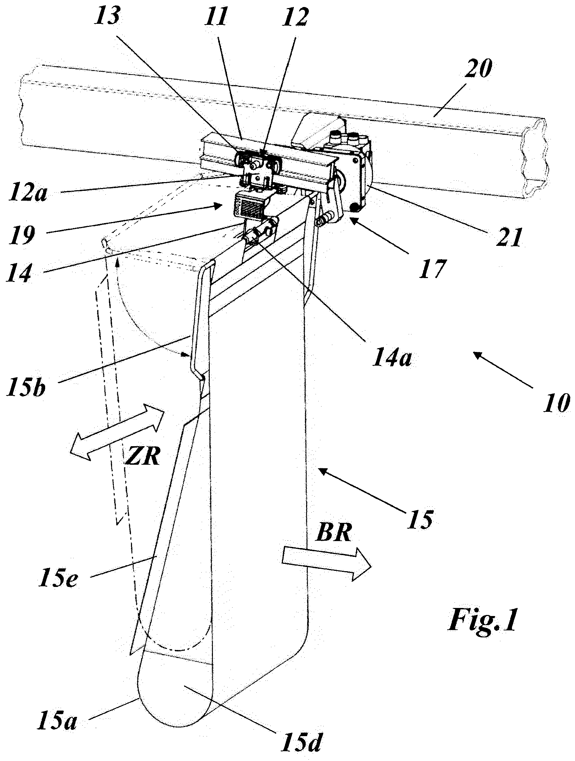

In Fig. 1 ist in einer perspektivischen Seitenansicht eine Ausgestaltung der Taschenöffnungsvorrichtung nach der Erfindung wiedergegeben, wobei nur die Transporttasche und der eigentliche, mit der Transporttasche in Eingriff kommende Öffnungsmechanismus gezeigt sind.

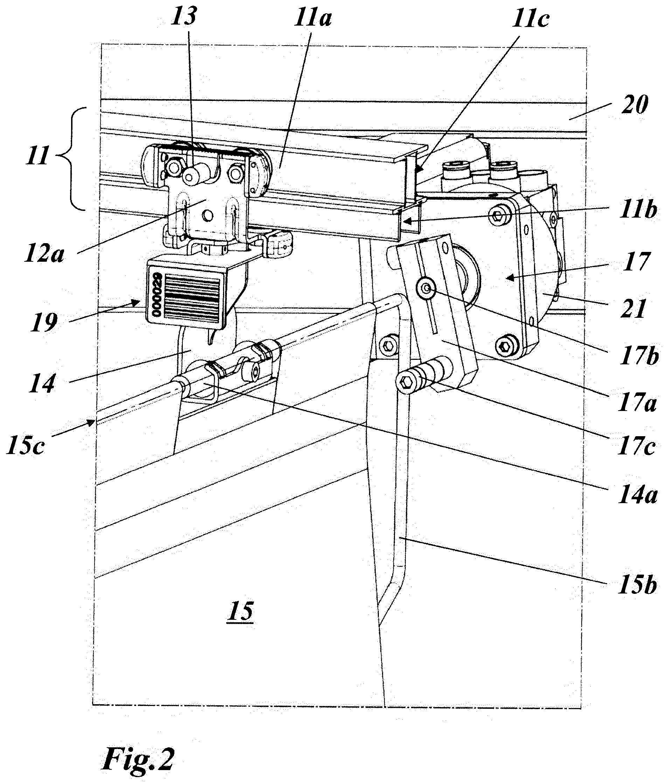

Die Taschenöffnungsvorrichtung 10 der Fig. 1 ist an einer Tragstruktur 20 montiert, die neben der eigentlichen Laufschiene 11 für den Transport angeordnet ist. Im vorliegenden Beispiel umfasst die Tragstruktur 20 ein Vierkantrohr; sie kann aber ohne weiteres auch anders gestaltet sein. Von der Laufschiene 11, die sich in einer Beförderungsrichtung erstreckt, ist in Fig. 1 nur ein kurzer Abschnitt gezeigt. Wie in der vergrösserten Darstellung der Fig. 2 zu erkennen ist, ist die Laufschiene 11 symmetrisch zu einer vertikalen Mittelebene ausgebildet und weist zwei gegenüberliegende, U-förmige Seitenrinnen 11a und 11c sowie eine untere, ebenfalls U-förmige Mittelrinne 11b auf, in denen ein Laufwagen 12 mit mehreren Rädern läuft und geführt wird. Laufrinne 11 und Laufwagen 12 können dabei so ausgebildet sein, wie dies in den Druckschriften WO 2016/030275 A1 und WO 2016/030274 A1 beschrieben und erläutert ist.

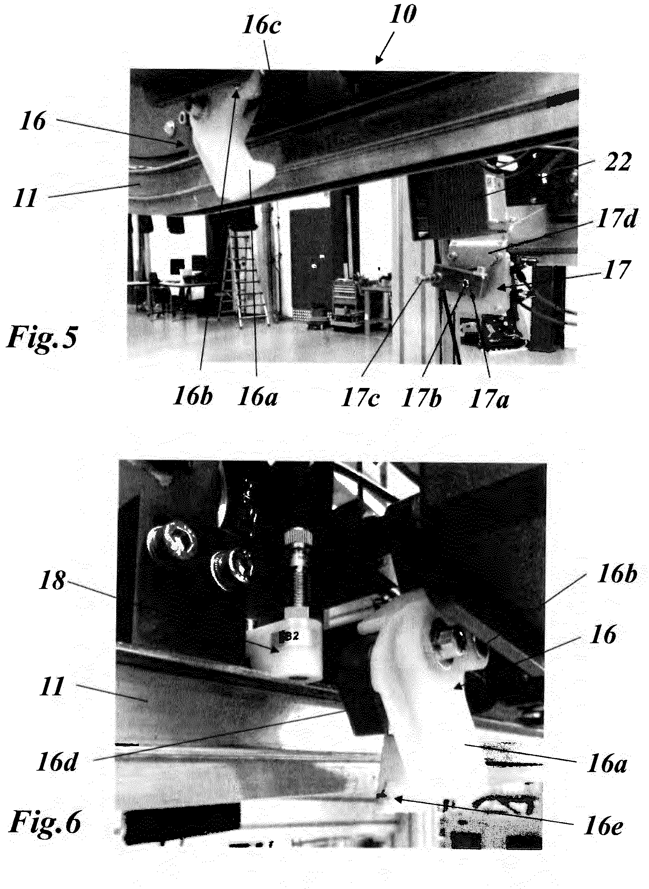

Am U-förmigen Wagenkörper 12a des Laufwagens 12 ist oben zwischen zwei Laufrädern ein seitlich abstehendes, stift- oder bolzenförmiges Eingriffselement 13 angebracht, auf das weiter unten noch im Zusammenhang mit einem für das Stoppen und Weiterbefördern des Laufwagens 12 zuständigen Hebelmechanismus 16 (Fig. 5 und 6) eingegangen wird. Auf der Unterseite des Wagenkörpers 12a ist ein Tragelement 14 fest angebracht, das als Winkelblech ausgebildet ist und am unteren Ende ein rohrförmiges Rahmenlager 14a aufnimmt und fixiert, welches eine quer zur Beförderungsrichtung BR (einfacher Pfeil in Fig. 1) orientierte Schwenkachse 15c für einen im Rahmenlager 14a schwenkbar gelagerten Schwenkrahmen 15b definiert.

Der Schwenkrahmen 15b, der im gezeigten Ausführungsbeispiel als mechanisch stabiler, im Wesentlichen rechteckiger Drahtrahmen ausgebildet ist, ist Teil der Transporttasche 15, die über das Rahmenlager 14a und das Tragelement 14 fest und mit gleichbleibender Orientierung (Schwenkachse 15c quer zur Beförderungsrichtung BR) am Laufwagen 12 hängt.

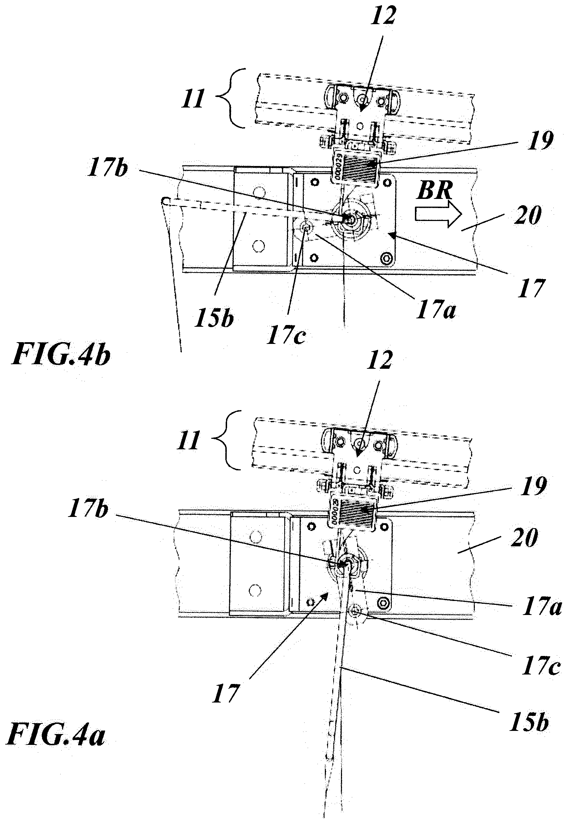

Die Transporttasche 15 umfasst eine mit beiden Enden unter Ausbildung einer nach unten hängenden Tragschlaufe 15a an dem Schwenkrahmen 15b befestigte Materialbahn, z.B. aus einem (verstärkten oder nicht verstärktem) Gewebe, einer (laminierten oder unlaminierten) Folie oder einem anderen geeigneten Material. Die beiden Enden der Tragschlaufe 15a sind in Beförderungsrichtung hintereinander angeordnet, so dass die Ränder der Tragschlaufe 15a an den Seiten bis auf im unteren Umlenkungsbereich angebrachte kurze Umlenkstützen 15d nicht miteinander verbunden sind. Der Schwenkrahmen 15b, der durch an den Enden der Materialbahn ausgebildete Taschen geführt ist, ist um die Schwenkachse 15c zwischen einer ersten Position, in welcher die Transporttasche 15 geschlossen ist (durchgezogen in Fig. 1; Fig. 4a), und einer zweiten Position, in welcher die Transporttasche 15 offen ist (strichpunktiert in Fig. 1; Fig. 4b), verschwenkbar. In der geschlossenen Position des Schwenkrahmens 15b wird die Transporttasche 15 an der Laufschiene 11 in Beförderungsrichtung BR befördert. In der offenen Position des Schwenkrahmens 15b ist der Laufwagen 12 mit der Transporttasche 15 angehalten und die geöffnete Transporttasche 15 kann in Zugangsrichtung ZR (Doppelpfeil in Fig. 1) von der einen oder anderen Seite beladen oder entladen werden.

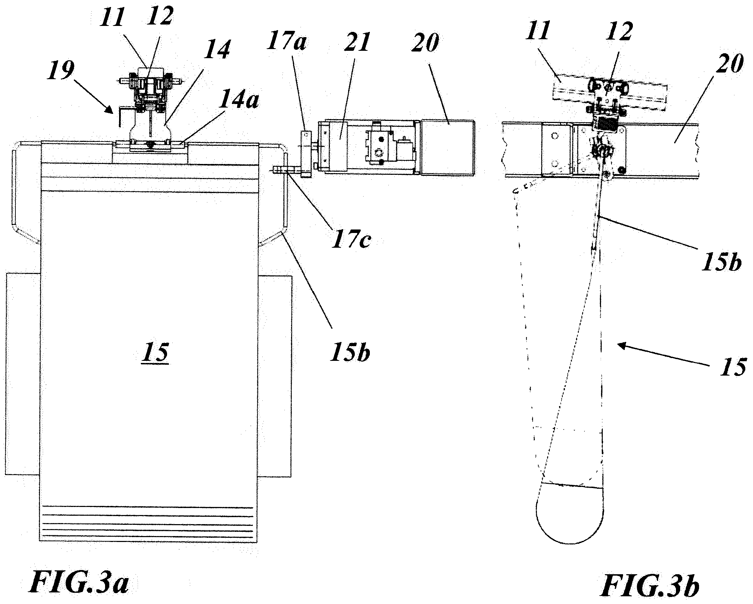

Das gezeigte Transport- bzw. Fördersystem mit der Laufschiene 11 und der an einer vorgegebenen Stelle der Laufschiene 11 angeordneten Taschenöffnungsvorrichtung 10 umfasst in der Regel eine Vielzahl von gleichartigen Laufwagen 12 und zugehörigen Transporttaschen 15. Um die Laufwagen 12 und die daran hängenden Transporttaschen 15 eindeutig identifizieren und auf ihrem Beförderungsweg verfolgen zu können, kann am Laufwagen 12 ein Informationsträger 19 fest angebracht sein, der eine, insbesondere maschinenlesbare, in der Regel codierte Information enthält, die optisch, magnetisch oder funktechnisch (z.B. als RFID) ausgelesen werden kann. Im gezeigten Beispiel der Fig. 1-4 umfasst der Informationsträger 19 einen Strichcode, der im Bereich der Öffnungsvorrichtung 10 durch eine dort angeordnete Datenaustausch- bzw. Lesevorrichtung 22 (Fig. 5) (optisch) abgetastet und ausgelesen werden kann.

Zum Öffnen der Transporttasche 15 durch Verschwenken des Schwenkrahmens 15b ist ein Öffnungsmechanismus 17 vorgesehen, der einen um eine quer zur Beförderungsrichtung BR orientierte Schwenkachse 17b verschwenkbaren Schwenkhebel 17a aufweist, welcher am Rand der Bewegungsbahn des Schwenkrahmens 15b einer geförderten Transporttasche 15 angeordnet ist. An seinem freien Ende ist der Schwenkhebel 17a mit einem parallel zur Schwenkachse 17b in die Bewegungsbahn des Schwenkrahmens 15b hineinragenden Mitnehmer 17c ausgestattet, welcher in Eingriff mit dem Schwenkrahmen 15b gebracht werden kann, um den Schwenkrahmen 15b am Laufwagen 12 zum Be- und/oder Entladen von zu transportierendem Fördergut von der ersten in die zweite Position zu verschwenken und in der zweiten Position zu halten (siehe insbesondere Fig. 4).

Der Schwenkhebel 17a ist zwischen einer Ruheposition (Fig. 4a) und einer Öffnungsposition (Fig. 4b) verschwenkbar, wobei sich der Mitnehmer 17c am Schwenkhebel 17a des Öffnungsmechanismus 17 in der Ruheposition in Beförderungsrichtung BR vor dem Schwenkrahmen 15b einer angehaltenen Transporttasche 15 befindet (Fig. 4a), und in der Öffnungsposition eine Position zwischen der Vorder- und Rückwand der Transporttasche 15 einnimmt (Fig. 4b). Der Schwenkbereich des Schwenkhebels 17a erstreckt sich dabei unterhalb der Schwenkachse 17b und beträgt zwischen Ruheposition und Öffnungsposition 90° oder mehr beträgt. Das Verschwenken des Schwenkhebels 17a kann durch einen Drehantrieb 21 bewirkt werden, der im vorliegenden Fall hydraulisch oder pneumatisch arbeitet.

Aus der In Fig. 4b gezeigten stationären, geöffneten Position wird die Transporttasche 15 wieder in die geschlossene Position überführt, indem sie mit ihrem Schwenkrahmen 15b über den Mitnehmer 17c gleitend in Beförderungsrichtung BR weiterbefördert wird. Dies kann passiv dadurch geschehen, dass die den Laufwagen 12 anhaltenden Haltemittel (Stoppelement 16d in Fig. 6) gelöst werden und der Laufwagen 12 auf einem schrägen Schienenabschnitt durch die Schwerkraft in Bewegung gesetzt wird. Dies kann aber auch aktiv dadurch geschehen, dass zusätzlich zu und gleichzeitig mit dem Lösen der Haltemittel dem Laufwagen 12 aktiv ein Bewegungsimpuls erteilt wird (Beförderungshebel 16a in Fig. 5 und 6). Sobald der Schwenkrahmen 15b in Beförderungsrichtung BR vollständig über den Mitnehmer 17c hinweg bewegt worden ist, schwenkt er aufgrund der Schwerkraft selbsttätig in die in Fig. 4a gezeigte Schliessposition zurück, so dass die Transporttasche 15 dann wieder geschlossen ist. Das Gleiten des Schwenkrahmens 15b über den Mitnehmer 17c kann dadurch erleichtert werden, dass auf dem Mitnehmer 17c eine leicht drehbare Rolle koaxial gelagert wird, auf welcher der Schwenkrahmen abrollt.

Wie bereits erwähnt worden ist, findet der in Fig. 4 gezeigte Öffnungsvorgang statt, nachdem der Laufwagen 12 mit der zu öffnenden Transporttasche 15 an einer vorbestimmten Position im Bereich des Öffnungsmechanismus 17 angehalten (gestoppt) worden ist. Diese vorbestimmte Position ist so gewählt, dass der Schwenkhebel 17a mit dem Mitnehmer 17c relativ zum Schwenkrahmen 15b genau die in Fig. 4a gezeigte Stellung einnehmen kann. Besonders günstig sind die mechanischen Verhältnisse dabei, wenn die Schwenkachse 15c des Schwenkrahmens und die die Schwenkachse 17b des Öffnungsmechanismus zusammenfallen.

Damit ein ankommender Laufwagen 12 die besagte vorbestimmte (Halte-)Position einnehmen kann, ist gemäss Fig. 5 und 6 auf der dem Öffnungsmechanismus 17 gegenüberliegenden Seite der Laufschiene 11 ein Hebelmechanismus 16 angeordnet, der einerseits den Laufwagen 12 präzise stoppt und auch wieder frei gibt, und andererseits dem später wieder freigegebenen Laufwagen 12 einen Bewegungsimpuls erteilt, der in Beförderungsrichtung BR gezielt in Bewegung setzt.

Der Hebelmechanismus 16 umfasst zwei um eine gemeinsame Schwenkachse 16b gemeinsam verschwenkbare Hebel, nämlich ein hebelförmiges Stoppelement 16d und einen Beförderungshebel 16a. Am grösseren Beförderungshebel 16a greift ein Schwenkmechanismus 16c an, der vorzugsweise pneumatisch oder hydraulisch betätigt wird und den Schwenkvorgang der beiden Hebel 16a und 16d bewirkt. Fig. 6 zeigt das Stoppelement 16d (zusammen mit dem Beförderungshebel 16a) in der Stoppposition. In dieser Position fährt ein von rechts kommender Laufwagen 12 mit seinem Eingriffselement 13 - ohne mit dem Beförderungshebel 16a in Konflikt zu geraten - gegen das Stoppelement 16d und stoppt an dieser Stelle. Der angehaltene Laufwagen 12 kann sofort von einem oberhalb der Laufschiene 11 angeordneten Laufwagendetektor 18 detektiert und das Detektionssignal an eine (nicht gezeigte) Steuerung weitergeleitet werden, die dann den Öffnungsmechanismus 17 aktiviert und somit das Aufschwenken des Schwenkrahmens 15b mittels des Öffnungsmechanismus initiiert.

Wenn der Be- und/oder Entladevorgang bei geöffneter Transporttasche 15 abgeschlossen ist, werden beide Hebel 16a und 16d schnell in Beförderungsrichtung nach oben verschwenkt. Das hat zur Folge, dass einerseits das Stoppelement 16d den Weg für den angehaltenen Laufwagen 12 frei gibt, und andererseits der nach oben verschwenkende Beförderungshebel 16a gleichzeitig mit seinem am freien Ende angeformten, abgekröpften Beförderungselement 16e mit dem Eingriffselement 13 am Laufwagen 12 in Eingriff kommt und dem Laufwagen 12 dadurch einen Bewegungsimpuls in Beförderungsrichtung BR erteilt (auf der gegenüberliegenden Seite gleitet der hochgeschwenkte Schwenkrahmen in dieser Phase über den Mitnehmer 17c des Öffnungsmechanismus 17). Anschliessend schwenken die Hebel 16a und 16d wieder in die in Fig. 6 gezeigte Ausgangsstellung zurück und sind bereit zum Stoppen eines nachfolgenden Laufwagens.

## Patentansprüche

1. Taschenöffnungsvorrichtung (10) zum Öffnen einer Transporttasche (15), umfassend
a. eine im Bereich der Laufschiene (11) angeordnete erste Vorrichtung (16d, 18) zum Anhalten eines Laufwagens (12) und
b. wenigstens einen im Bereich der Laufschiene (11) angeordneten Öffnungsmechanismus (17) zum Öffnen einer an einem angehaltenen Laufwagen (12) hängenden Transporttasche (15), welche Transporttasche (15) eine mit zwei Enden unter Ausbildung einer nach unten hängenden, eine Vorder- und eine Rückwand bildenden Tragschlaufe (15a) an einem Schwenkrahmen (15b) befestigte Materialbahn aufweist, wobei die beiden Enden der Tragschlaufe (15a) in Beförderungsrichtung (BR) hintereinander angeordnet sind, sodass der Schwenkrahmen (15b) am Laufwagen (12) um eine quer zur Beförderungsrichtung (BR) orientierte zweite Schwenkachse zwischen einer ersten Position, in welcher die Transporttasche (15) geschlossen ist, und einer zweiten Position, in welcher die Transporttasche (15) offen ist, verschwenkbar ist, wobei
c. der Öffnungsmechanismus (17) entweder einen
i. um eine dritte quer zu der Beförderungsrichtung (BR) orientierte Schwenkachse verschwenkbaren Schwenkhebel (17a) aufweist, welcher am Rand der Bewegungsbahn des Schwenkrahmens (15b) einer geförderten Transporttasche (15) angeordnet ist und an seinem freien Ende mit einem Mitnehmer (1 7c) ausgestattet ist, welcher in Eingriff mit dem Schwenkrahmen (15b) bringbar ist, um den Schwenkrahmen (15b) am Laufwagen (12) zum Be- und/oder Entladen von zu transportierendem Fördergut von der ersten in die zweite Position zu verschwenken und in der zweiten Position zu halten, oder
ii. einen linearen Aktuator aufweist um den Schwenkrahmen (15b) zu verschwenken, oder
iii. eine Öffnungsschnecke aufweist, die von der Seite an den Schwenkrahmen (15b) heranführbar ist um den Schwenkrahmen (1 5b) auf dem grösser werdenden Radius der Schnecke gleitend in die Öffnungsposition zu verschwenken, oder
iv. einen automatisch arbeitenden Greifer aufweist, mittels dem der Schwenkrahmen (15b) ausserhalb der Schwenkachse ergreifbar ist und diesen in die Öffnungsposition zu verschwenken.

2. Taschenöffnungsvorrichtung nach Anspruch 1, **dadurch gekennzeichnet, dass** der Schwenkhebel (17a) zwischen einer Ruheposition und einer Öffnungsposition verschwenkbar ist, wobei sich der Mitnehmer (17c) am Schwenkhebel (17a) des Öffnungsmechanismus in der Ruheposition vor dem Schwenkrahmen (15b) einer angehaltenen Transporttasche (15) befindet, und in der Öffnungsposition eine Position zwischen der Vorder- und Rückwand der Transporttasche (15) einnimmt.

3. Taschenöffnungsvorrichtung nach Anspruch 1 oder 2, **dadurch gekennzeichnet, dass** die erste Vorrichtung (16d, 18) ein bewegliches Stoppelement (16d) aufweist, welches in einer ersten Position einen ankommenden Laufwagen (12) am vorbestimmten Punkt der Laufschiene (11) anhält und in einer zweiten Position einen dort angehaltenen Laufwagen (12) freigibt.

4. Taschenöffnungsvorrichtung nach Anspruch 3, **dadurch gekennzeichnet, dass** das bewegliche Stoppelement (16d) um eine quer zur Beförderungsrichtung (BR) orientierte erste Schwenkachse (16b) schwenkbar gelagert und zwischen der ersten Position und der zweiten Position um die erste Schwenkachse (16b) verschwenkbar ist.

5. Taschenöffnungsvorrichtung nach Anspruch 4, **dadurch gekennzeichnet, dass** dem beweglichen Stoppelement (16d) ein mit dem Stoppelement gemeinsam um die erste Schwenkachse (16b) verschwenkbarer Beförderungshebel (16a) zugeordnet ist, welcher bei der Freigabe eines angehaltenen Laufwagens (12) durch das Stoppelement (16d) gleichzeitig dem Laufwagen (12) einen Bewegungsimpuls in Beförderungsrichtung (BR) erteilt.

6. Taschenöffnungsvorrichtung nach einem der vorhergehenden Ansprüche, **dadurch gekennzeichnet, dass** innerhalb der ersten Vorrichtung (16d, 18) am vorbestimmten Punkt der Laufschiene (11) ein Laufwagendetektor (18) angeordnet ist, welcher einen angehaltenen Laufwagen (12) detektiert, und dass der Laufwagendetektor (18) steuerungstechnisch mit dem Öffnungsmechanismus (17) verbunden ist.

7. Verfahren zum Öffnen einer Transporttasche (15), die sich zur Beförderung von Gütern an einem Laufwagen (12) hängend entlang einer sich in einer Beförderungsrichtung (BR) erstreckenden Laufschiene (11) in Beförderungsrichtung (BR) bewegt, **dadurch gekennzeichnet, dass**
a. der Laufwagen (12) mit der daran hängenden Transporttasche (15) an einem vorbestimmten Punkt der Laufschiene (11) zum Öffnen der Transporttasche (15) in seiner Vorwärtsbewegung einzeln angehalten wird, und
b. dass die Transporttasche (15) des Laufwagens (12) zum Be- und/oder Entladen von zu transportierendem Fördergut erst geöffnet wird, wenn sich der Laufwagen (12) bereits in seiner Ruheposition befindet, wobei das Be- und Entladen des zu transportierenden Fördergutes quer zur Beförderungsrichtung (BR) durch seitliche Öffnungen der Transporttasche (15) erfolgt oder das Be- und Entladen der Transporttasche (15) von oben durchgeführt wird.

8. Verfahren nach Anspruch 7, **dadurch gekennzeichnet, dass** die Ankunft des Laufwagens (12) in seiner Ruheposition mittels eines Laufwagendetektors (18) detektiert wird, und dass der Laufwagendetektor (18) einen Öffnungsmechanismus (17) in Gang setzt, wenn er einen Laufwagen (12) in der Ruheposition detektiert.

9. Verfahren nach Anspruch 7 oder 8, **dadurch gekennzeichnet, dass** die Transporttasche (15) des Laufwagens (12) am oberen Ende einen Schwenkrahmen (15b) aufweist, welcher zum Öffnen bzw. Schliessen der Transporttasche (15) verschwenkt wird.

10. Verfahren nach Anspruch 9, **dadurch gekennzeichnet, dass** die Transporttasche (15) eine mit beiden Enden unter Ausbildung einer nach unten hängenden Tragschlaufe (15a) an dem Schwenkrahmen (15b) befestigte Materialbahn aufweist, wobei die beiden Enden der Tragschlaufe (15a) in Beförderungsrichtung (BR) hintereinander angeordnet sind, dass der Schwenkrahmen (15b) am Laufwagen (12) um eine quer zur Beförderungsrichtung (BR) orientierte erste Schwenkachse (1 5c) zwischen einer ersten Position, in welcher die Transporttasche (15) geschlossen ist, und einer zweiten Position, in welcher die Transporttasche (15) offen ist, verschwenkbar ist, und dass der Schwenkrahmen (15b) am Laufwagen (12) zum Be- und/oder Entladen von zu transportierendem Fördergut durch einen Öffnungsmechanismus (17) von der ersten in die zweite Position verschwenkt und in der zweiten Position gehalten wird.

11. Verfahren nach Anspruch 10, **dadurch gekennzeichnet, dass** der Öffnungsmechanismus (17) ein zum Öffnen der Transporttasche (15) bewegbares Element (17a) umfasst.

12. Verfahren nach Anspruch 10 oder 11, **dadurch gekennzeichnet, dass** nach dem Be- und/oder Entladen der Laufwagen (12) mit der daran hängenden Transporttasche (15) an dem vorbestimmten Punkt der Laufschiene (11) frei gegeben wird, und dass der Schwenkrahmen (15b) nach der Freigabe um die erste Schwenkachse (15c) von der zweiten Position in die erste Position zurückschwenkt, wobei vorzugsweise das Zurückschwenken des Schwenkrahmens (1 5b) aufgrund der Schwerkraft selbsttätig erfolgt.

13. Verfahren nach Anspruch 12, **dadurch gekennzeichnet, dass** die am Laufwagen (12) hängende Transporttasche (1 5) sich nach der Freigabe mit ihrem in der zweiten Position befindlichen Schwenkrahmen (15b) am Öffnungsmechanismus (17) vorbei bewegt, und dass der Schwenkrahmen (15b) erst nach dem Passieren des Öffnungsmechanismus (17) von der zweiten Position in die erste Position zurückschwenkt.

14. Verfahren nach Anspruch 1 3, **dadurch gekennzeichnet, dass** dem Laufwagen (12) mit der daran hängenden Transporttasche (15) nach der Freigabe ein Bewegungsimpuls in Beförderungsrichtung (BR) erteilt wird.

15. Verfahren nach Anspruch 14, **dadurch gekennzeichnet, dass** der Bewegungsimpuls mittels eines stationären, schwenkbaren Beförderungshebels (16a) erteilt wird, welcher kurzzeitig mit dem Laufwagen (12) in Eingriff gebracht wird.
